# EUROPEAN PATENT SPECIFICATION

(11) **EP 2 276 225 B1**
(45) Date of publication and mention of the grant of the patent: **05.10.2011**
(21) Application number: 10183568.4
(22) Date of filing: 08.04.2004
(51) Int. Cl.: H04M 3/30

(54) **A method of testing digital subscriber line broadband service**
Verfahren zum Testen des Breitbanddienstes digitaler Teilnehmerleitungen
Procédé pour tester un service à large bande d'une ligne d'abonné numérique

(30) Priority: 14.04.2003 CN 03110054; 08.04.2003 CN 03109394
(43) Date of publication of application: 19.01.2011
(62) Divisional of application: 04726413.0
(73) Proprietor: Huawei Technologies Co., Ltd., Longgang District, Shenzhen Guangdong 518129 (CN)
(72) Inventor: Zhang, Hongyuan, 518129, Shenzhen Guangdong (CN); Zhang, Hao, 518129, Shenzhen Guangdong (CN); Li, Dong, 518129, Shenzhen Guangdong (CN); Huang, Ming, 518129, Shenzhen Guangdong (CN); Peng, Hu, 518129, Shenzhen Guangdong (CN)
(74) Representative: Körber, Martin Hans

(56) References cited:
- WO-A1-03/013015
- US-B1- 6 516 053

## Description

### Field of the Technology

The present invention generally relates to the field of broadband service over digital subscriber line, and particularly, to a test method for broadband service over digital subscriber line.

### Background of the Invention

In the field of telecommunications, an operator provides a subscriber via a twisted pair with both broadband and narrow-band telecommunication services simultaneously, e.g. ADSL (Asymmetric Digital Subscriber Line) over POTS (Plain Ordinary Telephone Service), ADSL over ISDN (Integrated Service Digital Network), VDSL (Very High Digital Subscriber Line) over POTS, VDSL over ISDN, and G.SHDSL (Single-pair High-speed Digital Subscriber Line). Such applications have become quite common in the field. In this invention, ADSL, VDSL, and G.SHDSL are referred to as xDSL for the sake of simplicity.

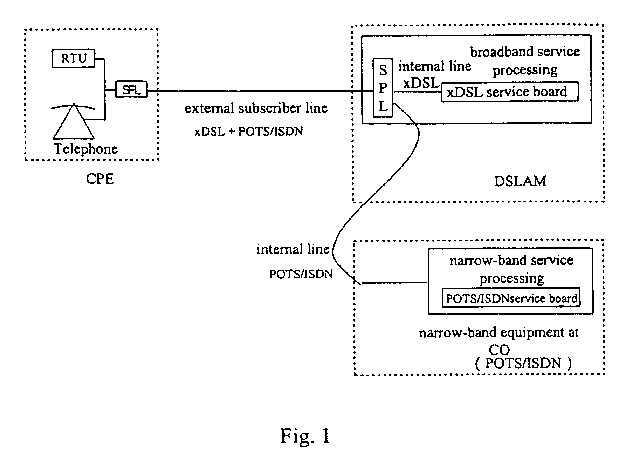

As shown in Figure 1, xDSL signals and POST/ISDN signals co-exist in one external subscriber line. At the side of Central Office (CO), a DSL Access Multiplexer (DSLAM), such as the Splitter (SPL) in a broadband CO equipment, separates broadband service from narrow-band service and distributes them to broadband service board (xDSL service board) and narrow-band service board (POTS/ISDN service board) for processing, respectively. At the side of Customer Premises Equipment (CPE), on the other hand, SPL in CPE distributes the separated broadband and narrow-band services to an xDSL Modem of Remote Terminal Unit (RTU) and a phone set, respectively.

When performing an xDSL service, xDSL service board at CO side and the xDSL Modem of RTU at the CPE side will firstly initiate a hand-shak process and establish the connection before transmission of digital data.

When it is impossible to initiate a hand-shaking process or to transmit digital data when performing xDSL services, how to locate the failure quickly, effectively, and accurately, especially how to decide quickly and accurately whether the xDSL service board works normally, has become an issue having a significant impact on the cost of operation and maintenance as well as the quality of service of the operator.

So far, starting as well as testing and maintaining an xDSL service rely primarily on experiences and on-site verification. There is no quick and reliable method for testing an external subscriber line to decide on such issues as whether this line is available to certain traffic, how much the bandwidth can be, what are the parameters of the line, whether CPE has been set normally, and etc. As a result, there are following drawbacks in the current approaches of test and maintenance:
(1) If the activation handshake process is not successful during test and maintenance, it is only possible to modify line parameters starting from CO to reduce the activation rate and lower the noise margin such that the line may be activated. This, however, cannot guarantee that there is no failure with CO or CPE. If the CO used has a failure, no activation handshake process will be successful while much effort has to be made to examine the external subscriber line and the settings of CPE; if it is CPE that has a failure, it will be difficult to find out, and only a replacement of CPE at the CPE side could be tried, which is again not easy to operate and maintain.
(2) When the activation handshake process is successful but the transmission of digital data fails, it is only possible to check the settings of Asynchronous Transfer Mode (ATM) layer of CO or CPE so as to decide whether there is data flow at the physical and ATM layers of a CO port or CPE port. As there is less means of maintenance for a CO port or CPE port to make decisions on the physical and ATM layers, higher maintenance cost and slow solutions to failures are resulted.
(3) When the ATM layer is found normal, as DSLAM deals with traffics up to the ATM layer only, it is impossible on DSLAM to check protocol encapsulations, to test IP, TCP, and other protocol layers above them, and to decide the real reason why CPE is unable to get accessed to an xDSL service. At present, the operator has to send maintenance personnel with abundant experiences for RTU to the customer premises while assigning personnel to operate equipments that support termination of layer 2 or layer 3 protocols, such as a Broad-band Access Server (BAS), at the CO side so as to cooperate with the trouble shooting, which leads to a high requirement on the capability of maintenance personnel as well as a high demand for the number of them. This has become a significant obstacle to the wide spread of broadband service over digital subscriber lines.

To sum up, there is so far in the prior art no good means in maintenance and test to find out the reason of a failure quickly if the activation handshake process cannot be completed or the digital data cannot be transferred during operation of an xDSL service. In particular, when the activation handshake process is unable to be completed, there is no way to decide whether it is a failure with CO or a failure with CPE, or even other failures, and it is often needed to call at the subscriber premises to make tests and locate defects. There is also the situation when the digital data can not be transferred after completing the activation handshake process, then it is impossible to decide whether it is a problem with CO or a problem with CPE, or even a problem with the subscriber's computer so that it is often necessary to carry out maintenance at the CPE side, which costs much time and effort, giving a negative impact on the service as well as cost control of the operator.

US 6517052B1 discloses a modular telecommunication test system including a portable computer system and at least one portable telecommunication test module located external to the computer system. The portable computer system stores a telecommunication test application. Each test module includes a communication port having an electrical connector, and is thus adapted for coupling to the portable computer system. Each test module also includes electrical circuitry for performing a set of telecommunication tests, wherein each test involves making at least one electrical measurement upon test involves making at least one electrical measurement upon a telecommunication service installation.

WO 03/013015A1 discloses a method for stabling communication in an ADSL subscriber loop, the method comprising the steps of determining that showtime cannot be entered during initialization of communication between the modems; requesting entry into a diagnostic mode by one of the modems upon the determining; diagnosing line conditions as being unable to support communication at a predetermined standard; and establishing communication at a standard lower than the predetermined standard.

### Summary of the Invention

In view of the above, a test method for broadband service over a digital subscriber line is provided, by which the problem of testing and locating a failure on the digital subscriber line can be solved, work efficiency can be increased, and operating cost can be lowered.

The technical solution provided by this invention is as follows:
A test method of Digital Subscriber Line (DSL) broadband service for use in tests of Central Office (CO) equipments and Customer Premises Equipments (CPE) of a DSL broadband service system, comprises,
A. disconnecting the equipment to be tested from the equipments at the other end;
B. connecting the equipment to be tested with a configured test board, simulating the other-end equipment of the equipment to be tested through the test board, and making at least one of tests of activation handshake, Asynchronous Transfer Mode (ATM) layer, and high-hierarchy protocols on the equipment to be tested.

Wherein the said test board is configured as a broadband testing system used for simulating the CPE and/or CO equipment.

Wherein the said test board is configured as a Digital Subscriber Line Access Multiplexer (DSLAM) unit which is independence or part of CO equipment.

Wherein the said test board is configured as the CPE which is independence or part of the said CPE.

When the said equipment to be tested is the CPE, the said test of activation handshake in step B comprises:
B11. setting activation parameters in the test board, and initiating a handshake request with the equipment to be tested;
B12. the tested equipment and the test board operating each other, both entering a state of activation when mutually recognized standards for activation parameters are met, acquiring actual activation parameters, and verifying whether an activation function and related parameters of the tested equipment are normal.

When the said equipment to be tested is CO equipment, the said test of activation handshake in step B comprises:
B21. setting activation parameters in the test board, and initiating a handshake request with the test board;
B22. the tested equipment and the test board operating each other, both entering a state of activation when mutually recognized standards for activation parameters are met, acquiring actual activation parameters, and verifying whether an activation function and related parameters of the tested equipment are normal.

When the said equipment to be tested is the CPE, the said test of ATM layer in step B comprises:
B31. looping back a permanent virtual channel (PVC) or permanent virtual path (PVP) to be tested in the DSL broadband service system;
B32. the tested equipment sending, by itself or controlled by the test board via an embedded operation channel (EOC), an ATM cell based on PVC or PVP;
B33. the tested equipment deciding whether the channel between a loop-back point and the CPE is normal according to whether the tested equipment receives the ATM cell it has sent.

When the said equipment to be tested is the CPE, the said test of ATM layer in step B comprises:
B41. the test board sending to an upper level network in the DSL broadband service system a constructed ATM cell, which the upper level network loops back;
B42. the test board receiving the ATM cell being looped back via the upper level network;
B43. the test board deciding whether a channel between a loop-back point and the test board is normal based on whether it receives the cell being looped back.

Preferably, the said test of high-hierarchy protocols in step B comprises: performing at least one of the tests of ATM layer encapsulation protocol, and/or dynamic host configuration protocol (DHCP), and/or the tested equipment supporting point-to-point protocol, Ping initiated by the tested equipment, Ping initiated by the test board, and file transfer protocol (FTP).

Preferably, the said test of ATM layer encapsulation protocol comprises,
B511. the test board constructing an IP message or a message of the media access control (MAC) layer and sending the message to the tested equipment via an embedded operation channel (EOC);
B512. the tested equipment checking whether it has received the message, if it has received the message, reporting the message to the test board via a management system of the tested equipment;
B513. the test board comparing the message sent with the message received, deciding whether the message has been sent normally and whether the content is correct to decide whether configuration and function of the encapsulation protocol of the tested equipment are correct.

Preferably, when the said tested equipment is the CPE, the test of DHCP comprises,
B621. the tested equipment, controlled by a management system of the CPE, initiating to the test board a DHCP request;
B622. the test board assigning an IP address for the tested equipment and checking whether what the tested equipment reports is the obtained IP address to decide whether configuration and function of DHCP are correct.

When the said tested equipment is the CO equipment, the test of DHCP comprises,
B721. the test board initiating to the tested equipment a DHCP request;
B722. the tested equipment assigning an IP address for the test board, and the test board checking whether what the test board reports by itself is the obtained IP address to decide whether configuration and function of DHCP are correct.

Preferably, wherein the said test of tested equipment supporting point-to-point protocol comprises, a test of tested equipment supporting point-to-point protocol over ATM (PPPOA) and/or test of tested equipment supporting point-to-point protocol over Ethernet (PPPOE).

When the said tested equipment is CPE, the said test of tested equipment supporting point-to-point protocol comprises,
B831. configuring the test board as a server supporting point-to-point protocol, and configuring the tested equipment as a client supporting point-to-point protocol;
B832. the tested equipment accessing the test board by dialing in the mode of point-to-point protocol;
B833. the test board monitoring each process at the server as well as each process at the client;
B834. the test board deciding whether configuration and function of point-to-point protocol are correct by checking various states of the server and client.

When the said tested equipment is CO equipment, the said test of tested equipment supporting point-to-point protocol comprises,
B931.configuring the tested equipment as a server supporting point-to-point protocol, and configuring the test board as a client supporting point-to-point protocol;
B932. the test board accessing the tested equipment by dialing in the mode of point-to-point protocol;
B933, the tested equipment monitoring each process at the server as well as each process at the client and reporting the monitored states to the test board;
B934. the test board deciding whether configuration and function of point-to-point protocol are correct by checking various states of the server and client.

When the said tested equipment is the CPE, the said test of initiated Ping comprises,
B 1041. the tested equipment obtaining an IP address;
B1042. the test board issuing via an embedded operation channel IP parameters to the tested equipment;
B1043. the tested equipment performing a Ping test of the test board based on the IP parameters and sending test results to the test board, which decides whether the IP layer is normal according to the test results.

When the said tested equipment is CO equipment, the said test of initiated Ping comprises,
B1141. the test board being configured with an IP address;
B1142. the tested equipment issuing via an embedded operation channel IP parameters to the test board;
B 1143. the test board performing a Ping test of the tested equipment based on the IP parameters and obtaining test results, by which the test board decides whether the IP layer is normal.

When the tested equipment is the CPE, the said test of FTP comprises,
B 1251. the tested equipment obtaining an IP address;
B1252. the test board simulating an FTP server to issue an IP address and FTP parameters to the tested equipment;
B1253. the tested equipment uploading and downloading files via the simulated server;
B1254. the test board obtaining uploading and downloading rates in the simulating test and comparing them with actually activated rates to decide whether service bandwidth of the subscriber is normal.

When the tested equipment is the CO equipment, the said test of FTP comprises,
B1351. the test board being configured with an IP address;
B1352. the tested equipment simulating an FTP server to issue an IP address and FTP parameters to the test board;
B1353. the test board uploading and downloading files via the simulated server;
B1354. the test board obtaining uploading and downloading rates in the simulating test and comparing them with the actually activated rates to decide whether service bandwidth of the subscriber is normal.

The said disconnecting the equipment to be tested from the equipments at the other end in step A comprises, disconnecting from a relay in the equipments at the other end through a relay in the tested equipment; and
the said connecting the equipment to be tested with a configured test board in step B comprises, connecting a relay in the equipment to be tested with a relay on the configured test board.

Step of connecting the relay in the equipment to be tested with the relay on the configured test board comprises, the relay in the equipment to be tested and the relay on the test board connecting the equipment to be tested and the test board with a first bus, respectively. The said first bus is an original bus.

The said connecting the relay in the equipment to be tested with the relay on the configured test board comprises, connecting the equipment to be tested with a first bus through the relay in the equipment to be tested, connecting the test board with a second bus through the relay on the test board, and short-circuiting the first and second buses.

The said first bus is an original bus, and the said second bus is a new one currently configured.

The said test board is configured to connect with a port of the xDSL board, and the test board and the port of the xDSL board jointly simulate CO or CPE equipment.

This invention configures a test board in advance, which can simulate CO or CPE. According to the method of this invention, first the external subscriber line between CO and CPE is disconnected, then the test board simulating CO is connected with CPE or the test board simulating CPE is connected with CO, and the line activation test of xDSL, simulating test of the physical layer, and simulating tests of high-hierarchy protocols are carried out for CPE or CO, respectively. Thus failures can be analyzed and located easily and solutions are found quickly. In other words, the method provided by this invention presents a solution to the test of digital subscriber lines and location of failures thereof, improving the work efficiency and lowering the operation cost.

### Brief Description of the Drawings

Figure 1 is a schematic diagram which illustrates a system in the prior art providing both broadband and narrow-band telecommunications services.
Figure 2 is a schematic which illustrates the CO test in embodiment 1 of this invention.
Figure 3 is the main flowchart of test in embodiment 1.
Figure 3A is the flowchart of activation test by simulating CO.
Figure 3B is the flowchart of ATM layer test.
Figure 3C is the flowchart of test supporting PPPOA and PPPOE by simulating CO.
Figure 3D is the flowchart of Ping test initiated by subscriber.
Figure 3E is the flowchart of FTP test.
Figure 4 is a schematic which illustrates the CPE test in embodiment 2 of this invention.
Figure 5 is the main flowchart of test in embodiment 2.
Figure 5A is the flowchart of CPE activation test.
Figure 5B is the flowchart of ATM layer test.
Figure 5C is the flowchart of test supporting PPPOA and PPPOE by simulating remote end.
Figure 5D is the flowchart of FTP test.
Figure 6 is a schematic which illustrates the test board constructed by the service board and CO.
Figures 7-12 are schematics which illustrate specific embodiments of this invention where a test board simulating CO is connected with CPE or a test board simulating CPE is connected with CO.

### Embodiments of the Invention

The present invention is hereinafter described in detail with reference to the accompanying drawings.

According to embodiments of this invention, a test board is pre-configured for testing a digital subscriber line and locating failures, and a broadband testing system (BTS) is configured on the test board for simulating CO or CPE.

### Embodiment 1:

In this embodiment, a test board is configured to simulate CO. The test board replaces the simulated CO, connects with CPE, and carries out such operations as setting and obtaining activation parameters, performance statistics, warning statistics, detecting the arrival of threshold values, locating CPE and checking whether the external subscriber line works normally. Through the test board, simulating tests of cell layer and ATM layer cell channel, tests of ATM encapsulation protocols for Ethernet/IP, tests of Ping, simulating tests of PPPOA or PPPOE, or/and simulating tests of FTP servers can be conducted so as to verify the settings of CPE and computers bearing CPE.

This embodiment is now described by an example using the ADSL board as the xDSL service board in CO.

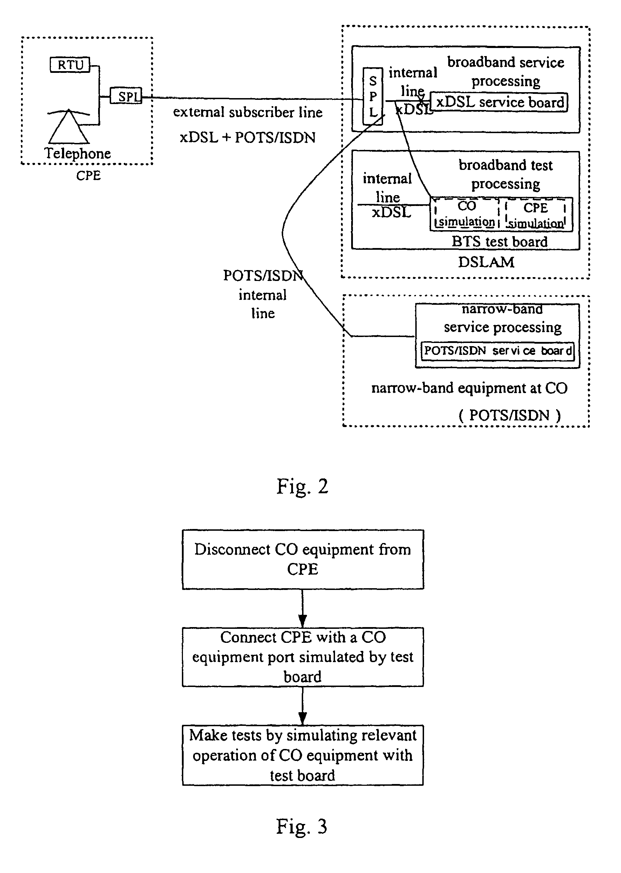

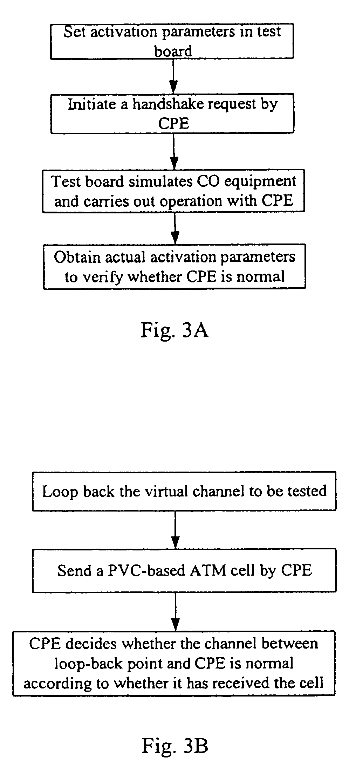

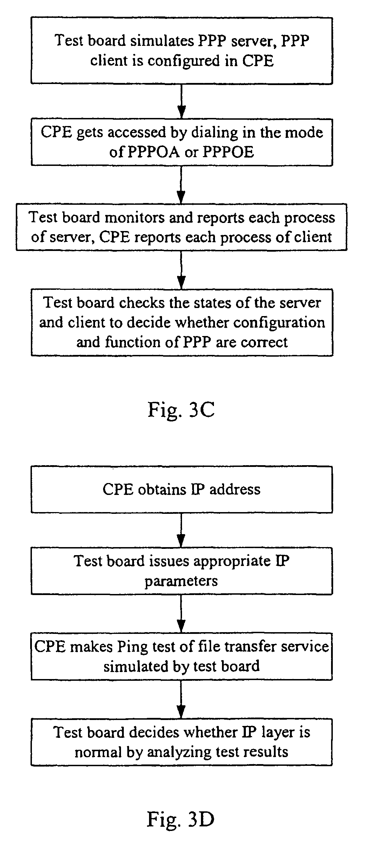

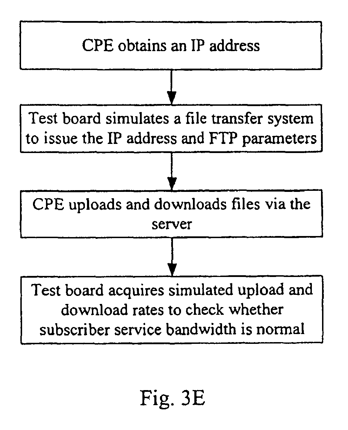

Refer to Figure 2 and Figure 3, the switchover is carried out by the network management or the hosts administrating the ADSL service via a control relay or subscriber line switchover matrix (referred to hereinafter as relay). CPE is disconnected from the CO port to which it connected and instead is connected to the simulated CO port on the test board. Then BTS on the test board simulates the proper operations of CO to make tests and diagnosis as well as simulating tests of physical layer and protocol layer for the external subscriber lines and CPE. The process of the test board simulating CO is described in detail as follows.

### A. Test of activation handshake process of CO, referring to the flowchart of Figure 3A.

By switchover of the relay, CPE is connected with the simulated CO interface on the test board. The activation parameters of ADSL in line are set and obtained with the definitions in relevant sections of RFC2662 MIB. The primary activation parameters include: line operating mode, channel mode, delay of upstream and downstream interleaving channel (or interleaving degree of upstream and downstream), target noise margin for upstream and downstream, and maximum and minimum rates of upstream and downstream, and etc. The handshake is initiated by CPE, then the two sides operate each other based on the activation parameters set on the test board; after that, both enter the activated state when the standards of activation parameters mutually recognized are met; finally, the actual parameters for activation can be obtained. Meanwhile, performance statistics, warning statistics, setting of thresholds, submission of reached thresholds, verification of the actually activated functions of CPE and the currently activated parameters, and examination of the line can be carried out for the external subscriber line, and the most appropriate settings of activation parameters can be obtained for the tested subscriber line.

### B. Test of ATM layer, referring to the flowchart of Figure 3B.

The ATM layer test can be carried out for CPE which is accessed via ADSL/SHDSL based on ATM technique.

The test of ATM connected with the operation, administration and maintenance (OAM) layer can be carried out for the services configured on CPE. The test board loops back to itself via the permanent virtual channel (PVC) or permanent virtual path (PVP) to be tested. CPE sends, by itself or controlled by the test board via an embedded operation channel (EOC), a PVC-based ATM cell, and then receives the cell. CPE decides whether the channel between it and the test board works normally according to whether it receives the PVC cell it has sent.

Under the condition that it is sure nothing is wrong with the CO and CPE cell layer that is simulated, constructed ATM cells can be sent by the test board itself, not via CPE, to upper layer network of DSL broadband service system. The cell loops back via the upper layer network and is received by the test board, which will, according to whether it receives the PVC cell it has sent, decide whether the channel between the loop-back point in the upper layer network and the test board is normal and where the broken point for abnormal loop-back is located.

The ATM layer test includes the test of F4/F5 OAM, which primarily is loop-back test and continuity check, so as to ensure the upper layer network as well as the configuration and function of the ATM layer at CPE are normal. Usually, CPE is configured to support the complete F4/F5 OAM, the F4/F5 OAM operation is initiated on the test board and results of the operation are obtained there.

### C. Simulating tests of high-hierarchy protocols.

(1) The test of ATM layer encapsulation protocol may be carried out for CPE which is accessed via ADSL/SHDSL based on ATM technique. The test board is configured in the proper mode of IPoA/1483B/1483R/PPPoA depending on the configurations of the DSL broadband service system and CPE. The test board constructs an IP message or an MAC-layer message and sends it to CPE which will check whether it receives the message. If receiving the message, CPE will report it to the test board which compares the sent message with the received message to decide whether the message has been sent normally and whether the content is correct. In this way, the configuration and function of encapsulation protocol of CPE can be checked.
(2) Test of DHCP. A DHCP server is configured in the test board and a DHCP client is built in CPE. Via EOC, the test board controls CPE to initiate a DHCP request and the DHCP server configured in the test board assigns an IP address for CPE. Then the configuration and function of DHCP can be checked according to whether CPE has acquired an IP address.
(3) Test of PPPOA or/and PPPOE, referring to Figure 3C. The test board simulates a PPPOA/OE server and a PPP client is configured in CPE. The test board controls, via EOC, CPE to access by dialing in the PPPOE or PPPOA mode and CPE reports each process of the PPP client to the test board. The test board acquires PPP packets and makes analysis of the packets as well as the data link parameters negotiated during the Link Control Protocol (LCP) and the Network Control Protocol (NCP), such as size of a PPP packet, authentication protocol used, head compressing options and etc. The test board also decides whether the configuration and function of PPP works normally by checking the negotiated states of CPE and the test board.

When CPE supports PPPOA, PPPOA will be adopted to make the simulating tests; when CPE supports PPPOE, PPPOE will be adopted to make the simulating tests.
(4) Test of Ping initiated by CPE, referring to Figure 3D: After CPE obtains an IP address by way of DHCP, statically configured IP, or PPP, or EOC, the test board sends appropriate IP parameters via EOC, controls CPE to make a Ping test for the FTP server of the test board, and acquires, via the management system of CPE, the results of the Ping test reported by CPE as well as the message sent by CPE and the message received. The test board also decides whether the IP layer works normally by analyzing the results of Ping test according to the received message.
(5) Test of Ping initiated by the test board: After CPE obtains an IP address by way of DHCP, statically configured IP, or PPP, or EOC, the test board makes a Ping test of CPE based on the IP address acquired. The test board, according to the message sent by the test board and the CPE-received message acquired through the CPE management system, makes analysis of the results of the Ping test to decide whether the IP layer works normally.
(6) Test of FTP, referring to Figure 3D: After CPE obtains an IP address by way of DHCP, statically configured IP, or PPP, or EOC, the test board simulates the function of an FTP server and issues the IP address and FTP parameters (any subscriber's name and password) of the FTP server simulated by the test board. CPE uploads and downloads FTP files from the FTP server simulated by the test board in BINARY and ASCII modes through the FTP client configured in CPE. The test board acquires the upload and download rates of the simulating tests, compares them with the actual activated rates of upload and download, and check whether the upload and download rates of the simulating tests are matched with the currently activated rates and whether the subscriber's service bandwidth is normal.

### Embodiment 2:

In this embodiment, a test board is configured to simulate CPE. The test board replaces the simulated CPE, connects with CO, and carries out such operations as activation, submission of activation parameters, performance statistics, warning submission, detecting arrival of threshold values, locating CO and checking whether the external subscriber line works normally. Through the test board, simulating tests of the cell layer and ATM layer channel, tests of ATM encapsulation protocol for Ethernet/IP, tests of Ping, simulating tests of PPPOA or PPPOE, and/or simulating tests of FTP download can be constructed and initiated so as to verify the settings of upper layer network.

This embodiment is described below by an example using the ADSL board as the xDSL service board in CO.

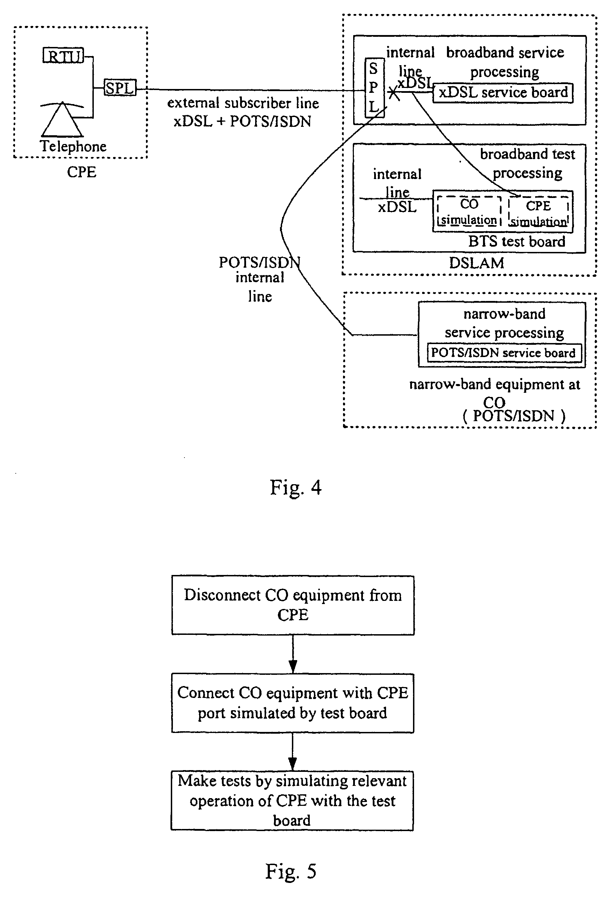

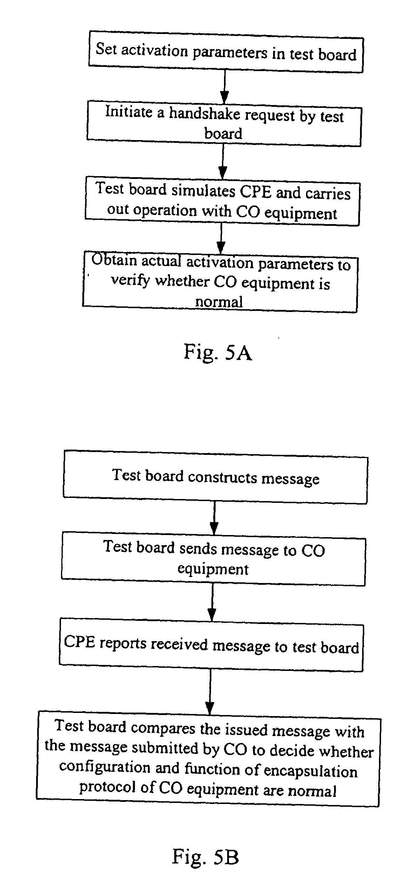

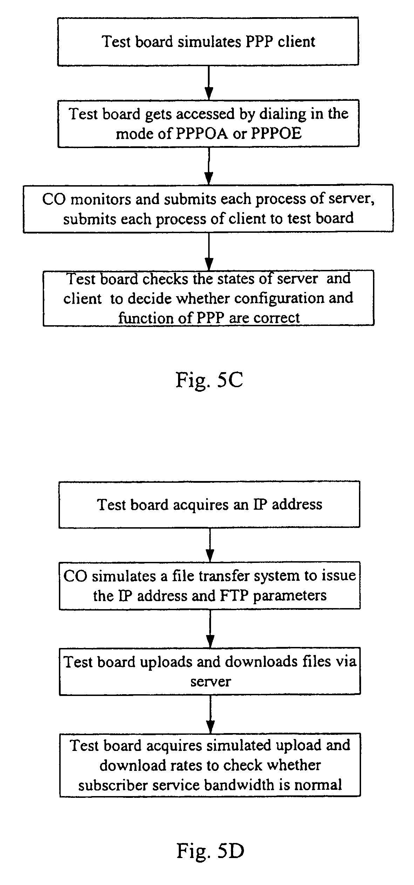

Referring to Figure 4 and Figure 5, the switchover is carried out by the network management or hosts administrating the ADSL service via relays, CPE is disconnected from the CO port, and CO is instead connected to the simulated CPE port on the test board. Then BTS on the test board simulates proper operations and tests of CPE, and makes simulating tests of physical layer and protocol layer for the external subscriber lines and CO. The process of the test board simulating CPE is described in detail as follows.

### A. Test of activation handshake process of CPE, referring to Figure 5A.

By switchover of the relay, the actual CO is connected with the simulated CPE interface on the test board. The activation parameters of ADSL are set and obtained. The primary activation parameters include: activation mode, transmitting gain and receiving gain of CPE, deviation of target noise margin, and maximum number of bit per tone. By connecting with the actual service port of CO, the BTS simulates CPE and initiates a handshake request. Then both CO and the BTS of the test board operate each other and enter the activated state when the standards of activation parameters mutually recognized are met, and the actual parameters for activation are obtained from the test board and reported so that the activation function of the actual CO port is checked.

### B. Simulating tests of high-hierarchy protocols

(1) Referring to Figure 5B, the test of ATM layer encapsulation protocol may be carried out for CO accessed via ADSL/SHDSL based on ATM technique. The test board is configured in the proper mode of IPoA/1483B/1483R/PPPoA depending on the configurations of the DSL broadband service system and CO. The test board constructs an IP message or an MAC-layer message and sends it to the CO side, i.e. the equipment terminating ATM layer at the CO side, for example, BAS set in DSLAM. The CO side checks whether it receives the message, if yes, reports the message to the test board, which compares the message constructed in advance with the message reported by the CO side to decide whether the message has been sent normally and whether the content is correct. In this way, the configuration and function of encapsulation protocol at the CO side can be checked.
(2) Test of DHCP: A DHCP client is configured in the test board. The test board requests the DHCP server at the CO side for an IP address, determines the test result according to the obtained address, and accordingly, decides whether the configuration and function of DHCP server at the CO side is normal.
(3) Test of PPPOA or/and PPPOE, referring to Figure 5C: The test board is configured with a PPP client and accessed to CO by dialing in the PPPOE or PPPOA mode. CO monitors each process and state of the PPP client and reports them to the test board. The test board acquires PPP packets and makes analysis of the packets as well as the data link parameters negotiated during the Link Control Protocol (LCP) and the Network Control Protocol (NCP), such as size of a PPP packet, authentication protocol used, head compressing options, and etc. The test board also decides whether the configuration and function of PPP works normally by checking the negotiated states of CO and the test board.
(4) Test of Ping initiated by the test board: After obtaining an IP address by way of DHCP, statically configured IP, or PPP, or EOC, the test board makes a Ping test for the CO of the IP address acquired. The test board makes analysis of the results of the Ping test as well as the messages sent and received so as to decide whether the IP layer works normally.
(5) Test of FTP, referring to Figure 5D: After an IP address is obtained by way of DHCP, statically configured IP, or PPP, the DSLAM management channel controls the test board, and CO issues the IP address of FTP server and FTP parameters, for instance, the subscriber's name and password to the test board. The test board uploads and downloads FTP files from the FTP server in CO in BINARY and ASCII modes through the FTP client configured in it. The test board acquires the upload and download rates of the simulating tests, compares them with the actual activation parameters as well as the rates of upload and download, and checks whether the upload and download rates of the simulating tests are matched with the currently activated rates and whether the subscriber's service bandwidth is normal.

Although embodiments 1 and 2 mentioned above are described by taking ADSL as an example, the method provided by this invention is applicable to simulating tests of high-hierarchy protocols of DSL of various kinds. Tests of physical layer and activation for other kinds of DSL can be conducted in line with the appropriate characteristics thereof while test solutions to high-hierarchy protocol layers are the same as described for these embodiments.

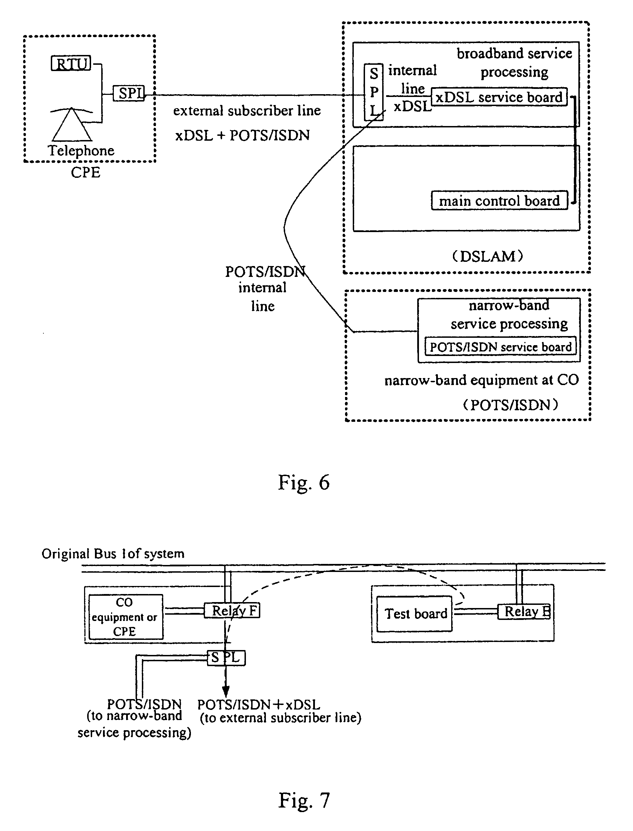

In embodiments 1 and 2, the test board is a separated single board. It can also be realized, however, as shown in Figure 6, by coordination between xDSL service board and main control board of CO. A certain port of the xDSL service board can be used to simulate CO while CPE can be accessed by the controlled switchover of relays. In this way, such tests as that of the line activation parameters of ports on the xDSL service board can be implemented. The simulating test of CPE can be realized by creating a CPE-simulating system on the xDSL service board or the main control board while the simulating tests of high-hierarchy protocols are all carried out on the main control board, and the testing principles thereof are the same as in embodiments 1 and 2.

When the test board in this invention is used to simulate CO, it may also be configured in the same way as the DSLAM unit of the simulated CO so as to replace the DSLAM unit thereof to test the activation handshake with CPE, thus deciding whether the DSLAM unit of that CO has a failure. In this case, the test board may be a pre-configured test board specially used for the DSLAM unit in the simulated CO, or may be a broadband equipment in other COs. A DSLAM unit is the smallest element which can activate a handshake process in DSLAM.

When the test board in this invention is used to simulate CPE, it may be configured in the same way as the simulated CPE so as to replace CPE to test the activation handshake with CO, thus deciding whether anything is wrong with a terminal unit in CPE. In this case, the test board may be a pre-configured test board specially used to simulate CPE, or may be other CPE.

In the implementation of this invention, it is necessary to disconnect CO from CPE in the first place before connecting the test board simulating CO with CPE or connecting the test board simulating CPE with CO. The entire process of disconnection and connection is implemented by means of relays. The following embodiments are given to describe the process of disconnecting CO from CPE before connecting the test board simulating CO with CPE or connecting the test board simulating CPE with CO.

### Embodiment 3:

As shown in Figure 7, there exists original Bus 1 in a DSL broadband service system. Under normal conditions, CO or CPE is disconnected from Bus 1 via Relay F and connected to the external subscriber line so as to connect with another CPE or CO while the test board is disconnected from Bus 1 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 1 while Relay E connects the test board to Bus 1, thus replacing the current CO or CPE, that is, the test board simulating that CO or CPE is connected with another CPE or CO.

### Embodiment 4:

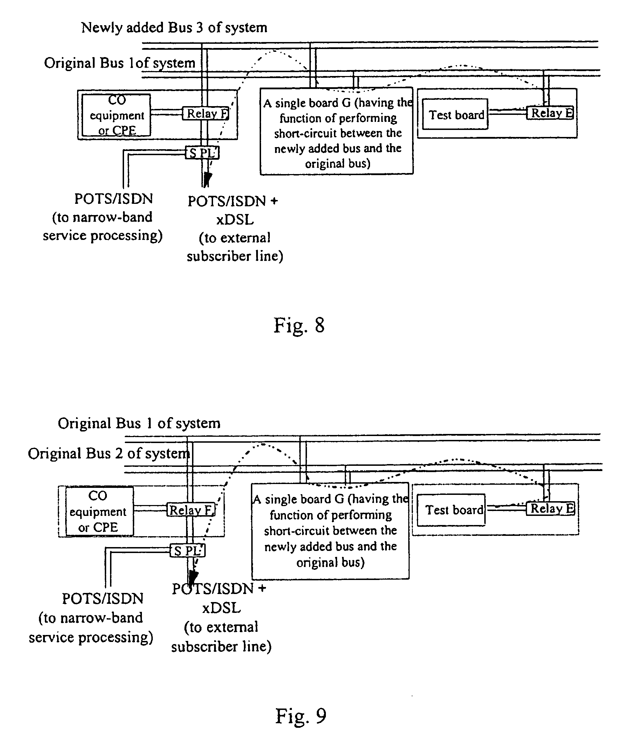

As shown in Figure 8, there exists original Bus 1 in a DSL broadband service system while new Bus 3 and a single board having the function of short-circuiting Bus 1 and Bus 3 are configured by this invention. Under normal conditions, CO or CPE disconnects from Bus 3 via Relay F and connects to the external subscriber line, accordingly connecting with another CPE or CO while the test board disconnects from Bus 1 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 3 while Relay E connects the test board to Bus 1. As the single board short-circuits Bus 1 and Bus 3, the current CO or CPE is replaced, that is, the test board simulating that CO or CPE is connected with another CPE or CO.

### Embodiment 5:

As shown in Figure 9, there exist original Buses 1 and 2 as well as a single board having the function of short-circuiting Bus 1 and Bus 2 in a DSL broadband service system. The single board short-circuits Bus 1 and Bus 2. Under normal conditions, CO or CPE disconnects from Bus 1 via Relay F and connects to the external subscriber line, accordingly connecting with another CPE or CO while the test board disconnects from Bus 2 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 1 while Relay E connects the test board to Bus 2. As the single board short-circuits Bus 1 and Bus 2, the current CO or CPE is replaced, that is, the test board simulating that CO or CPE is connected with another CPE or CO.

### Embodiment 6:

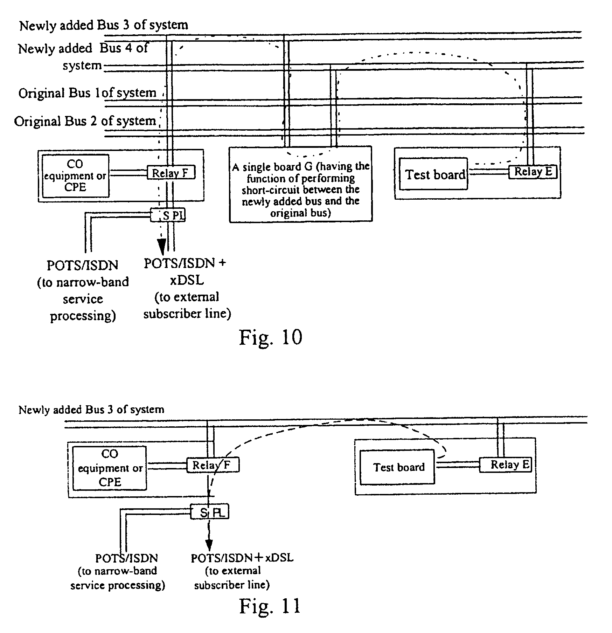

As shown in Figure 10, there exist original Bus 1 and Bus 2 in a DSL broadband service system. Bus 3 and Bus 4 as well as a single board having the function of short-circuiting between Bus 3 and Bus 4 are configured by this invention while the single board short-circuits Bus 3 and Bus 4. Under normal conditions, CO or CPE disconnects from Bus 3 via Relay F and connects to the external subscriber line, accordingly connecting with another CPE or CO while the test board disconnects from Bus 4 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 3 while Relay E connects the test board to Bus 4. As the single board short-circuits Bus 3 and Bus 4, the current CO or CPE is replaced, that is, the test board simulating that CO or CPE is connected with another CPE or CO.

### Embodiment 7:

As shown in Figure 11, Bus 3 is configured in a DSL broadband service system by this invention. Under normal conditions, CO or CPE is disconnected from Bus 3 via Relay F and connected to the external subscriber line, accordingly connecting with another CPE or CO while the test board is disconnected from Bus 3 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 3 while Relay E connects the test board to Bus 3, thus replacing the current CO or CPE, that is, the test board simulating that CO or CPE is connected with another CPE or CO.

### Embodiment 8:

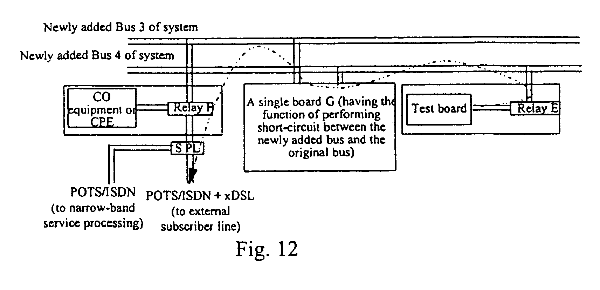

As shown in Figure 12, Bus 3 and Bus 4 as well as a single board having the function of short-circuiting Bus 3 and Bus 4 are configured by this invention while the single board short-circuits between Bus 3 and Bus 4. Under normal conditions, CO or CPE disconnects from Bus 3 via Relay F and connects to the external subscriber line, accordingly connecting with another CPE or CO while the test board disconnects from Bus 4 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 3 while Relay E connects the test board to Bus 4. As the single board short-circuits between Bus 3 and Bus 4, the current CO or CPE is replaced, that is, the test board simulating that CO or CPE is connected with another CPE or CO.

It can be appreciated that only preferred embodiments of this invention are described above and they are not to be construed as limits to the invention. Any modification, equivalent replacement or improvement without deviating from the principle of this invention should be included in the protection scope of this invention.

## Claims

1. A method for testing equipment in a Digital Subscriber Line, DSL, broadband service system, comprising:
disconnecting a tested equipment from an equipment at the other end;
connecting the tested equipment with a test board;
simulating, by the test board, operations of the equipment at the other end as a test of a handshake process and test of a high-hierarchy protocol;
wherein the simulating test of a handshake process is carried out for verification of actually activated functions of the tested equipment connected to the test board;
wherein the simulating test of a high-hierarchy protocol is carried out to check configuration and function of protocol of the tested equipment connected to the test board, wherein the high-hierarchy protocols comprise at least one of ATM layer encapsulation protocol, Dynamic Host Configuration Protocol, DHCP, Point-to-Point Protocol, Ping Protocol and File Transfer Protocol, FTP;
wherein when the tested equipment is Central Office, CO, equipment, the equipment at the other end is Customer Premises Equipment, CPE, connected with the CO equipment; and
when the tested equipment is CPE, the equipment at the other end is CO equipment connected with the CPE.

2. A test method according to Claim 1, wherein the test of the handshake process comprises:
setting activation parameters in the test board, and initiating a handshake request by the tested equipment or the test board;
performing a training between the tested equipment and the test board;
activating the tested equipment and the test board when mutually recognized standards for activation parameters are met;
acquiring actual activation parameters of the tested equipment; and
verifying whether an activation function and related parameters of the tested equipment are normal.

3. A test method according to Claim 2, wherein the test method further comprises a test of the tested equipment in ATM layer, and the test of the tested equipment in ATM layer comprises:
looping back a permanent virtual channel, PVC, or permanent virtual path, PVP, to be tested in the DSL broadband service system;
sending, by the tested equipment initiatively or controlled by the test board, a PVC or PVP based ATM cell via an embedded operation channel, EOC; and
determining, by the tested equipment, whether the channel between a loop-back point and the tested equipment is normal according to whether the tested equipment receives the ATM cell it has sent.

4. A test method according to Claim 2, wherein the test method further comprises a test of the tested equipment in ATM layer, and the test of the tested equipment in ATM layer comprises:
sending, by the test board, an ATM cell to an upper level network in the DSL broadband service system;
looping back, by the upper level network, the ATM cell;
receiving, by the test board, the ATM cell being looped back via the upper level network; and
determining, by the test board, whether a channel between a loop-back point and the test board is normal according to whether it receives the cell being looped back.

5. A test method according to Claim 3 or 4, wherein when the high-hierarchy protocol is the ATM layer encapsulation protocol, the simulating test of high-hierarchy protocols comprises,
constructing, by the test board, an IP message or a message of the media access control MAC layer and sending the IP message or the message of the MAC layer to the tested equipment via an embedded operation channel EOC;
determining, by the tested equipment, whether the tested equipment has received the message;
reporting, by the tested equipment, the message to the test board if the tested equipment has received the message;
comparing, by the test board, the message sent with the message received, determining that configuration and function of the ATM layer encapsulation protocol of the tested equipment are correct if the message has been sent normally and content of the message is correct.

6. A test method according to Claim 3 or 4, wherein when the high-hierarchy protocol is the DHCP, the simulating test of high-hierarchy protocols comprises,
receiving, by the test board, a DHCP request from the tested equipment; assigning, by the test board, an IP address for the tested equipment; and determining, by the test board, whether configuration and function of DHCP of the tested equipment are correct by checking whether an IP address is obtained by the tested equipment.

7. A test method according to Claim 3 or 4, wherein when the high-hierarchy protocol is the DHCP, the simulating test of high-hierarchy protocols comprises,
sending, by the test board, a DHCP request to the tested equipment;
assigning, by the tested equipment, an IP address for the test board; determining, by the test board, whether configuration and function of DHCP of the tested equipment are correct by checking whether an IP address is obtained by the test board.

8. A test method according to Claim 3 or 4, wherein when the high-hierarchy protocol is the point-to-point protocol, the simulating test of high-hierarchy protocols comprises,
accessing, by the tested equipment, the test board by dialing in the mode of point-to-point protocol;
monitoring, by the test board, each process at the tested equipment as well as each process at the test board;
determining, by the test board, whether configuration and function of point-to-point protocol are correct by checking states of the tested equipment and the test board.

9. A test method according to Claim 3 or 4, wherein when the high-hierarchy protocol is the point-to-point protocol, the simulating test of high-hierarchy protocols comprises,
accessing, by the test board, the tested equipment by dialing in the mode of point-to-point protocol;
monitoring, by the tested equipment, each process at the test board as well as each process at the tested equipment and reporting the monitored states to the test board;
determining, by the test board, whether configuration and function of point-to-point protocol are correct by checking states of the tested equipment and the test board.

10. A test method according to Claim 3 or 4, wherein when the high-hierarchy protocol is the Ping Protocol, the simulating test of high-hierarchy protocols comprises,
obtaining, by the tested equipment, an IP address;
sending, by the test board, IP parameters to the tested equipment via an embedded operation channel;
performing, by the tested equipment, a Ping test of the test board based on the IP parameters and sending test results to the test board;
determining, by the test board, whether the performance of the tested equipment on the IP layer is normal according to the test results.

11. A test method according to Claim 3 or 4, wherein when the high-hierarchy protocol is the Ping Protocol, the simulating test of high-hierarchy protocols comprises,
assigning an IP address to the test board;
sending, by the tested equipment, IP parameters to the test board via an embedded operation channel;
performing, by the test board, a Ping test of the tested equipment based on the IP parameters and obtaining test results;
determining, by the test board, whether the performance of the tested equipment on the IP layer is normal according to the test results.

12. A test method according to Claim 3 or 4, wherein when the high-hierarchy protocol is the FTP, the simulating test of high-hierarchy protocols comprises,
obtaining, by the tested equipment, an IP address;
sending, by the test board, an IP address and FTP parameters to the tested equipment;
uploading and downloading, by the tested equipment, files from the test board; obtaining, by the test board, uploading and downloading rates and comparing them with actually activated rates to decide whether service bandwidth employed by the tested equipment is normal.

13. A system for testing equipment in a DSL broadband service system, comprising:
a tested equipment and a test board;
wherein
the tested equipment is configured to disconnect from an equipment at the other end, and connect with the test board;
the test board is configured to simulate proper operations of the equipment at the other end;
the test board is configured to carry out a test of a handshake process for verification of actually activated functions of the tested equipment connected to the test board; and
the test board is configured to carry out a simulating test of a high-hierarchy protocol to check configuration and function of protocol of the tested equipment connected to the test board, wherein the high-hierarchy protocols comprise at least one of ATM layer encapsulation protocol, Dynamic Host Configuration Protocol, DHCP, Point-to-Point Protocol, Ping Protocol and File Transfer Protocol, FTP;
wherein when the tested equipment is Central Office, CO, equipment, the equipment at the other end is Customer Premises Equipment, CPE, connected with the CO equipment; and
when the tested equipment is CPE, the equipment at the other end is CO equipment connected with the CPE.

14. The system of claim 13, further comprising a first bus, connected to the tested equipment and the test board.

15. The system of claim 13 or 14, further comprising a first bus connected to the tested equipment, and a second bus connected to the test board; wherein the first bus and the second bus are connected.

## Patentansprüche

1. Verfahren zum Testen von Geräten in einem DSL-Breitbanddienstsystem (DSL
- Digital Subscriber Line - digitale Anschlussleitung), wobei das Verfahren Folgendes umfasst:
Trennen einer getesteten Einrichtung von einer Einrichtung an dem anderen Ende;
Verbinden der getesteten Einrichtung mit einer Testplatine;
Simulieren von Operationen der Einrichtung durch die Testplatine an dem anderen Ende als ein Test eines Quittungsaustauschprozesses und ein Test eines Protokolls mit hoher Hierarchie;
wobei der Simulierungstest eines Quittungsaustauschprozesses ausgeführt wird für eine Verifikation von tatsächlich aktivierten Funktionen der mit der Testplatine verbundenen getesteten Einrichtung;
wobei der Simulierungstest eines Protokolls mit hoher Hierarchie ausgeführt wird zum Prüfen einer Konfiguration und Funktion eines Protokolls der mit der Testplatine verbundenen getesteten Einrichtung, wobei die Protokolle mit hoher Hierarchie mindestens eines der Folgenden umfassen: ein ATM-Schichtkapselungsprotokoll, ein Dynamic-Host-Configuration-Protokoll DHCP, ein Point-to-Point-Protokoll, ein Ping-Protokoll und/oder ein File-Transfer-Protokoll FTP;
wobei, wenn die getestete Einrichtung eine Einrichtung des Vermittlungsamts (CO - Central Office) ist, die Einrichtung an dem anderen Ende eine mit der CO-Einrichtung verbundene Teilnehmereinrichtung (CPE - Customer Premises Equipment) ist; und
wenn die getestete Einrichtung eine CPE ist, die Einrichtung an dem anderen Ende eine mit der CPE verbundene CO-Einrichtung ist.

2. Testverfahren nach Anspruch 1, wobei der Test des
Quittungsaustauschprozesses Folgendes umfasst:
Einstellen von Aktivierungsparametem in der Testplatine und Initiieren einer Quittungsaustauschanforderung durch die getestete Einrichtung oder die Testplatine;
Durchführen eines Trainings zwischen der getesteten Einrichtung und der Testplatine;
Aktivieren der getesteten Einrichtung und der Testplatine, wenn gegenseitig anerkannte Normen für Aktivierungsparameter verfüllt sind;
Erfassen von tatsächlichen Aktivierungsparametern der getesteten Einrichtung und
Verifizieren, ob eine Aktivierungsfunktion und verwandte Parameter der getesteten Einrichtung normal sind.

3. Testverfahren nach Anspruch 2, wobei das Testverfahren weiterhin einen Test der getesteten Einrichtung in einer ATM-Schicht umfasst und der Test der getesteten Einrichtung in einer ATM-Schicht Folgendes umfasst; Zurückschleifen eines permanenten virtuellen Kanals (PVC - Permanent Virtual Channel) oder eines permanenten virtuellen Pfads (PVP - Permanent Virtual Path), der in dem DSL-Breitbanddienstsystem getestet werden soll; Senden einer PVC- oder PVP-basierten ATM-Zelle durch die getestete Einrichtung, initiativ oder durch die Testplatine gesteuert, über einen Embedded Operation Channel EOC; und
Bestimmen durch die getestete Einrichtung, ob der Kanal zwischen einem Rückschleifpunkt und der getesteten Einrichtung gemäß dem normal ist, ob die getestete Einrichtung die ATM-Zelle empfängt, die sie gesendet hat.

4. Testverfahren nach Anspruch 2, wobei das Testverfahren weiterhin einen Test der getesteten Einrichtung in einer ATM-Schicht umfasst und der Test der getesteten Einrichtung in einer ATM-Schicht Folgendes umfasst;
Senden einer ATM-Zelle durch die Testplatine an ein Netzwerk der oberen Ebene in dem DSL-Breitbanddienstsystem;
Zurückschleifen der ATM-Zelle durch das Netzwerk der oberen Ebene; Empfangen der über das Netzwerk der oberen Ebene zurückgeschleiften ATM-Zelle durch die Testplatine; und
Bestimmen durch die Testplatine, ob ein Kanal zwischen einem Rückschleifpunkt und der Testplatine gemäß dem normal ist, ob er die Zelle empfängt, die zurückgeschleift wird.

5. Testverfahren nach Anspruch 3 oder 4, wobei, wenn das Protokoll mit hoher Hierarchie das ATM-Schicht-Kapselungsprotokoll ist, der Simulierungstest der Protokolle mit hoher Hierarchie Folgendes umfasst:
Konstruieren einer IP-Nachricht oder einer Nachricht der MAC-Schicht (Media Access Control) durch die Testplatine und Senden der IP-Nachricht oder der Nachricht der MAC-Schicht an die getestete Einrichtung über einen Embedded Operation Channel EOC;
Bestimmen durch die getestete Einrichtung, ob die getestete Einrichtung die Nachricht empfangen hat;
Melden der Nachricht durch die getestete Einrichtung an die Testplatine, falls die getestete Einrichtung die Nachricht empfangen hat;
Vergleichen der gesendeten Nachricht mit der empfangenen Nachricht durch die Testplatine, Bestimmen, dass Konfiguration und Funktion des ATM-Schicht-Kapselungsprotokolls der getesteten Einrichtung korrekt sind, falls die Nachricht normal gesendet worden ist und der Inhalt der Nachricht korrekt ist.

6. Testverfahren nach Anspruch 3 oder 4, wobei, wenn das Protokoll mit hoher Hierarchie das DHCP ist, der Simulierungstest der Protokolle mit hoher Hierarchie Folgendes umfasst:
Empfangen einer DHCP-Anforderung von der getesteten Einrichtung durch die Testplatine;
Zuordnen einer IP-Adresse für die getestete Einrichtung durch die Testplatine; und
Bestimmen durch die Testplatine, ob Konfiguration und Funktion des DHCP der getesteten Einrichtung korrekt sind, durch Prüfen, ob von der getesteten Einrichtung eine IP-Adresse erhalten wird.

7. Testverfahren nach Anspruch 3 oder 4, wobei, wenn das Protokoll mit hoher Hierarchie das DHCP ist, der Simulierungstest der Protokolle mit hoher Hierarchie Folgendes umfasst:
Senden einer DHCP-Anforderung an die getestete Einrichtung durch die Testplatine;
Zuordnen einer IP-Adresse für die Testplatine durch die getestete Einrichtung; Bestimmen durch die Testplatine, ob Konfiguration und Funktion des DHCP der getesteten Einrichtung korrekt sind, durch Prüfen, ob von der Testplatine eine IP-Adresse erhalten wird.

8. Testverfahren nach Anspruch 3 oder 4, wobei, wenn das Protokoll mit hoher Hierarchie das Point-to-Point-Protokoll ist, der Simulierungstest der Protokolle mit hoher Hierarchie Folgendes umfasst:
Zugreifen auf die Testplatine durch die getestete Einrichtung durch Anwählen des Modus des Point-to-Point-Protokolls;
Überwachen jedes Prozesses bei der getesteten Einrichtung sowie jedes Prozesses bei der Testplatine durch die Testplatine;
Bestimmen durch die Testplatine, ob Konfiguration und Funktion des Point-to-Point-Protokolls korrekt sind, durch Prüfen von Zuständen der getesteten Einrichtung und der Testplatine.

9. Testverfahren nach Anspruch 3 oder 4, wobei, wenn das Protokoll mit hoher Hierarchie das Point-to-Point-Protokoll ist, der Simulierungstest der Protokolle mit hoher Hierarchie Folgendes umfasst:
Zugreifen auf die getestete Einrichtung durch die Testplatine durch Anwählen des Modus des Point-to-Point-Protokolls;
Überwachen jedes Prozesses an der Testplatine sowie jedes Prozesses an der getesteten Einrichtung durch die getestete Einrichtung und Melden der überwachten Zustände an die Testplatine;
Bestimmen durch die Testplatine, ob Konfiguration und Funktion des Point-to-Point-Protokolls korrekt sind, durch Prüfen von Zuständen der getesteten Einrichtung und der Testplatine.

10. Testverfahren nach Anspruch 3 oder 4, wobei, wenn das Protokoll mit hoher Hierarchie das Ping-Protokoll ist, der Simulierungstest der Protokolle mit hoher Hierarchie Folgendes umfasst:
Erhalten einer IP-Adresse durch die getestete Einrichtung;
Senden von IP-Parametern durch die Testplatine an die getestete Einrichtung über einen Embedded Operation Channel;
Durchführen eines Ping-Tests der Testplatine durch die getestete Einrichtung auf der Basis der IP-Parameter und Senden von Testergebnissen an die Testplatine;
Bestimmen durch die Testplatine, ob die Leistung der getesteten Einrichtung auf der IP-Schicht gemäß den Testergebnissen normal ist.

11. Testverfahren nach Anspruch 3 oder 4, wobei, wenn das Protokoll mit hoher Hierarchie das Ping-Protokoll ist, der Simulierungstest der Protokolle mit hoher Hierarchie Folgendes umfasst:
Zuweisen einer IP-Adresse an die Testplatine;
Senden von IP-Parametern durch die getestete Einrichtung an die Testplatine über einen Embedded Operation Channel;
Durchführen eines Ping-Tests der getesteten Einrichtung durch die Testplatine auf der Basis der IP-Parameter und Erhalten von Testergebnissen;
Bestimmen durch die Testplatine, ob die Leistung der getesteten Einrichtung auf der IP-Schicht gemäß den Testergebnissen normal ist.

12. Testverfahren nach Anspruch 3 oder 4, wobei, wenn das Protokoll mit hoher Hierarchie das FTP ist, der Simulierungstest der Protokolle mit hoher Hierarchie Folgendes umfasst:
Erhalten einer IP-Adresse durch die getestete Einrichtung;
Senden einer IP-Adresse und von FTP-Parametern durch die Testplatine an die getestete Einrichtung;
Heraufladen und Herunterladen von Dateien von der Testplatine durch die getestete Einrichtung;
Erhalten von Herauflade- und Herunterladeraten durch die Testplatine und Vergleichen dieser mit tatsächlich aktivierten Raten, um zu entscheiden, ob die von der getesteten Einrichtung verwendete Dienstbandbreite normal ist.

13. System zum Testen einer Einrichtung in einem DSL-Breitbanddienstsystem, wobei das System Folgendes umfasst:
eine getestete Einrichtung und eine Testplatine;
wobei
die getestete Einrichtung konfiguriert ist zum Trennen von einer Einrichtung an dem anderen Ende und Verbinden mit der Testplatine;
die Testplatine konfiguriert ist zum Simulieren von ordnungsgemäßen Operationen der Einrichtung an dem anderen Ende;
die Testplatine konfiguriert ist zum Ausführen eines Tests eines Quittungsaustauschprozesses zur Verifikation von tatsächlich aktivierten Funktionen der an die Testplatine angeschlossenen getesteten Einrichtung; und
die Testplatine konfiguriert ist zum Ausführen eines Simulierungstests eines Protokolls mit hoher Hierarchie zum Prüfen von Konfiguration und Funktion eines Protokolls der mit der Testplatine verbundenen getesteten Einrichtung,
wobei die Protokolle mit hoher Hierarchie mindestens eines der Folgenden umfassen: ein ATM-Schichtkapselungsprotokoll, ein Dynamic-Host-Configuration-Protokoll DHCP, ein Point-to-Point-Protokoll, ein Ping-Protokoll und/oder ein File-Transfer-Protokoll FTP;
wobei, wenn die getestete Einrichtung eine Einrichtung des Vermittlungsamts (CO - Central Office) ist, die Einrichtung an dem anderen Ende eine mit der CO-Einrichtung verbundene Teilnehmereinrichtung (CPE - Customer Premises Equipment) ist; und
wenn die getestete Einrichtung eine CPE ist, die Einrichtung an dem anderen Ende eine mit der CPE verbundene CO-Einrichtung ist.

14. System nach Anspruch 13, weiterhin umfassend einen ersten Bus, der mit der getesteten Einrichtung und der Testplatine verbunden ist.

15. System nach Anspruch 13 oder 14, weiterhin umfassend einen ersten Bus, der mit der getesteten Einrichtung verbunden ist, und einen zweiten Bus, der mit der Testplatine verbunden ist, wobei der erste Bus und der zweite Bus verbunden sind.

## Revendications

1. Procédé de test d'un équipement dans un système de service à large bande sur ligne d'abonné numérique, dite DSL, comprenant les étapes suivantes :
déconnexion d'un équipement testé et d'un équipement à l'autre extrémité ; connexion de l'équipement testé à une carte de test ;
simulation, par la carte de test, du fonctionnement de l'équipement à l'autre extrémité sous la forme d'un test d'une procédure d'établissement de liaison et d'un test d'un protocole de haute hiérarchie ;
le test de simulation d'une procédure d'établissement de liaison étant exécuté pour vérifier des fonctions effectivement activées de l'équipement testé connecté à la carte de test ;
le test de simulation d'un protocole de haute hiérarchie étant exécuté pour contrôler la configuration et la fonction du protocole de l'équipement testé connecté à la carte de test, les protocoles de haute hiérarchie comprenant au moins un des protocoles suivants : un protocole d'encapsulation sur la couche ATM, un protocole de configuration dynamique des hôtes, dit DHCP, un protocole point à point, un protocole Ping et un protocole de transfert de fichiers, dit FTP ;
si l'équipement testé est un équipement de central, dit CO, l'équipement à l'autre extrémité est un équipement d'installation d'abonné, dit CPE, connecté à l'équipement de CO ; et
si l'équipement testé est un CPE, l'équipement à l'autre extrémité est un équipement de CO connecté au CPE.

2. Procédé de test selon la revendication 1, le test de la procédure d'établissement de liaison comprenant les étapes suivantes :
définition de paramètres d'activation dans la carte de test, et déclenchement d'une demande d'établissement de liaison par l'équipement testé ou la carte de test ;
mise en oeuvre d'un apprentissage entre l'équipement testé et la carte de test ; activation de l'équipement testé et de la carte de test si des normes reconnues mutuellement associées aux paramètres d'activation sont satisfaites ;
acquisition de paramètres d'activation effectifs de l'équipement testé ; et vérification qu'une fonction d'activation et des paramètres connexes de l'équipement testé sont normaux.

3. Procédé de test selon la revendication 2, comprenant en outre un test de l'équipement testé dans la couche ATM, le test de l'équipement testé dans la couche ATM comprenant les étapes suivantes :
mise en boucle d'un circuit virtuel permanent, dit PVC, ou d'un conduit virtuel permanent, dit PVP, à tester dans le système de service à large bande sur DSL ;
transmission, par l'équipement testé, de sa propre initiative ou sous la commande de la carte de test, d'une cellule ATM en PVC ou en PVP par le biais d'un canal d'exploitation intégré, dit EOC ; et
détermination, par l'équipement testé, de ce que le canal entre un point de boucle et l'équipement testé est normal ou non selon que l'équipement testé reçoit ou non la cellule ATM qu'il a transmise.

4. Procédé de test selon la revendication 2, comprenant en outre un test de l'équipement testé dans la couche ATM, le test de l'équipement testé dans la couche ATM comprenant les étapes suivantes :
transmission, par la carte de test, d'une cellule ATM à un réseau de plus haut niveau dans le système de service à large bande sur DSL ;
mise en boucle, par le réseau de plus haut niveau, de la cellule ATM ;
réception, par la carte de test, de la cellule ATM mise en boucle par le biais du réseau de plus haut niveau ; et
détermination, par la carte de test, de ce qu'un canal entre un point de boucle et la carte de test est normal ou non selon qu'il reçoit ou non la cellule mise en boucle.

5. Procédé de test selon la revendication 3 ou 4, le test de simulation de protocoles de haute hiérarchie comprenant, si le protocole de haute hiérarchie est le protocole d'encapsulation sur la couche ATM, les étapes suivantes :
construction, par la carte de test, d'un message IP ou d'un message de la couche de commande d'accès au support, dite MAC, et transmission du message IP ou du message de la couche MAC à l'équipement testé par le biais d'un canal d'exploitation intégré, dit EOC ;
détermination, par l'équipement testé, de ce que l'équipement testé a reçu le message ou non ;
signalisation, par l'équipement testé, du message à la carte de test si l'équipement testé a reçu le message ; et
comparaison, par la carte de test, du message transmis au message reçu, pour déterminer si la configuration et la fonction du protocole d'encapsulation sur la couche ATM de l'équipement testé sont correctes si le message a été envoyé normalement et si le contenu du message est correct.

6. Procédé de test selon la revendication 3 ou 4, le test de simulation de protocoles de haute hiérarchie comprenant, si le protocole de haute hiérarchie est le DHCP, les étapes suivantes :
réception, par la carte de test, d'une demande DHCP en provenance de l'équipement testé ;
attribution, par la carte de test, d'une adresse IP pour l'équipement testé ; et détermination, par la carte de test, de ce que la configuration et la fonction du DHCP de l'équipement testé sont correctes ou non en contrôlant si une adresse IP est obtenue par l'équipement testé.

7. Procédé de test selon la revendication 3 ou 4, le test de simulation de protocoles de haute hiérarchie comprenant, si le protocole de haute hiérarchie est le DHCP, les étapes suivantes :
transmission, par la carte de test, d'une demande DHCP à l'équipement testé ;
attribution, par l'équipement testé, d'une adresse IP pour la carte de test ; et
détermination, par la carte de test, de ce que la configuration et la fonction du DHCP de l'équipement testé sont correctes ou non en contrôlant si une adresse IP est obtenue par la carte de test.

8. Procédé de test selon la revendication 3 ou 4, le test de simulation de protocoles de haute hiérarchie comprenant, si le protocole de haute hiérarchie est le protocole point à point, les étapes suivantes :
accès, par l'équipement testé, à la carte de test par appel commuté du mode du protocole point à point ;
suivi, par la carte de test, de chaque processus au niveau de l'équipement testé et de chaque processus au niveau de la carte de test ; et
détermination, par la carte de test, de ce que la configuration et la fonction du protocole point à point sont correctes ou non en contrôlant les états de l'équipement testé et de la carte de test.

9. Procédé de test selon la revendication 3 ou 4, le test de simulation de protocoles de haute hiérarchie comprenant, si le protocole de haute hiérarchie est le protocole point à point, les étapes suivantes :
accès, par la carte de test, à l'équipement testé par appel commuté du mode du protocole point à point ;
suivi, par l'équipement testé, de chaque processus au niveau de la carte de test et de chaque processus au niveau de l'équipement testé, et signalisation des états suivis à la carte de test ; et
détermination, par la carte de test, de ce que la configuration et la fonction du protocole point à point sont correctes ou non en contrôlant les états de l'équipement testé et de la carte de test.

10. Procédé de test selon la revendication 3 ou 4, le test de simulation de protocoles de haute hiérarchie comprenant, si le protocole de haute hiérarchie est le protocole Ping, les étapes suivantes :
obtention, par l'équipement testé, d'une adresse IP ;
transmission, par la carte de test, de paramètres IP à l'équipement testé par le biais d'un canal d'exploitation intégré ;
exécution, par l'équipement testé, d'un test Ping de la carte de test compte tenu des paramètres IP, et transmission des résultats du test à la carte de test ; et
détermination, par la carte de test, de ce que le fonctionnement de l'équipement testé sur la couche IP est normal ou non selon les résultats du test.

11. Procédé de test selon la revendication 3 ou 4, le test de simulation de protocoles de haute hiérarchie comprenant, si le protocole de haute hiérarchie est le protocole Ping, les étapes suivantes :
attribution d'une adresse IP à la carte de test ;
transmission, par l'équipement testé, de paramètres IP à la carte de test par le biais d'un canal d'exploitation intégré ;
exécution, par la carte de test, d'un test Ping de l'équipement testé compte tenu des paramètres IP, et obtention des résultats du test ; et
détermination, par la carte de test, de ce que le fonctionnement de l'équipement testé sur la couche IP est normal ou non selon les résultats du test.

12. Procédé de test selon la revendication 3 ou 4, le test de simulation de protocoles de haute hiérarchie comprenant, si le protocole de haute hiérarchie est le FTP, les étapes suivantes :
obtention, par l'équipement testé, d'une adresse IP ;
transmission, par la carte de test, d'une adresse IP et de paramètres FTP à l'équipement testé ;
téléchargement en amont et téléchargement en aval, par l'équipement testé, de fichiers depuis la carte de test ; et
obtention, par la carte de test, de vitesses de téléchargement en amont et de téléchargement en aval, et comparaison de celles-ci à des vitesses effectivement activées pour évaluer si la largeur de bande de service utilisée par l'équipement testé est normale.

13. Système de test d'un équipement dans un système de service à large bande sur DSL, comprenant :
un équipement testé et une carte de test ;
l'équipement testé étant conçu pour se déconnecter d'un équipement à l'autre extrémité et se connecter à la carte de test ;
la carte de test étant conçue pour simuler le fonctionnement réel de l'équipement à l'autre extrémité ;
la carte de test étant conçue pour exécuter un test d'une procédure d'établissement de liaison pour vérifier des fonctions effectivement activées de l'équipement testé connecté à la carte de test ; et
la carte de test étant conçue pour exécuter un test de simulation d'un protocole de haute hiérarchie pour contrôler la configuration et la fonction du protocole de l'équipement testé connecté à la carte de test, les protocoles de haute hiérarchie comprenant au moins un des protocoles suivants : un protocole d'encapsulation sur la couche ATM, un protocole de configuration dynamique des hôtes, dit DHCP, un protocole point à point, un protocole Ping et un protocole de transfert de fichiers, dit FTP ;
si l'équipement testé est un équipement de central, dit CO, l'équipement à l'autre extrémité est un équipement d'installation d'abonné, dit CPE, connecté à l'équipement de CO ; et
si l'équipement testé est un CPE, l'équipement à l'autre extrémité est un équipement de CO connecté au CPE.

14. Système selon la revendication 13, comprenant en outre un premier bus, connecté à l'équipement testé et à la carte de test.

15. Système selon la revendication 13 ou 14, comprenant en outre un premier bus connecté à l'équipement testé et un deuxième bus connecté à la carte de test, le premier bus et le deuxième bus étant connectés l'un à l'autre.
